# EUROPEAN PATENT APPLICATION

(11) **EP 1 873 199 A1**
(43) Date of publication of application: **02.01.2008**
(21) Application number: 07118127.5
(22) Date of filing: 24.08.2005
(51) Int. Cl.: C08K 5/3435, C08K 5/00

(54) **In-can stabilizers**

(30) Priority: 03.09.2004 EP 04104248
(62) Divisional of application: 05779826.6
(71) Applicant: Ciba Specialty Chemicals Holding Inc., 4057 Basel (CH)
(72) Inventor: Nesvadba, Peter, 1723, Marly (CH); Fuchs, André, 79418, Schliengen-Obereggenen (DE); Ilg, Stephan, 4304, Giebenach (CH); Pighetti, Edith, 4102, Binningen (CH)

(57) **Abstract**

The invention relates to the use of quinone methides or of a blend of quinone methides and highly sterically hindered nitroxyl radicals as in-can stabilizers for UV-curable resins.

## Description

The present invention relates to the use of quinone methides as in-can stabilizers for UV-curable resins and to mixtures of highly sterically hindered nitroxyl radicals and quinone methides as in-can stabilizers for UV-curable resins.

UV-curable inks and varnishes have been one of the fastest growing technologies in the past two decades. This growth is forecast to continue well into the future with the development of new applications for UV curing, such as inks for food packaging. New raw materials are required to ensure that UV-technology can meet the challenging demands of low odor and low migration, low yellowing while maintaining high reactivity.

The UV-curable resins are composed of a monofunctional or multifunctional monomer, oligomer or polymer molecule and a photo initiating compound. Monomers, oligomers or polymers typically used for UV curing have at least one ethylenically unsaturated group like an acrylate or methacrylate functional groups. Polymerization is achieved by exposure to UV radiation.

UV-curable resins frequently have to be stabilised against undesired polymerisation or crosslinking of the ethylenically unsaturated group in order that they have adequate storage stability without reducing the cure-speed when radiated.
The stabilizers should be compatible with a wide range of commercially available oligomers such as epoxy-, urethane-, polyester- and acrylate- systems.

In the prior art, for example in WO01/42313, there are proposed for that purpose sterically hindered nitroxyl radicals of 2,2,6,6-tetramethylpiperidine in general. Examples of typical radical scavenger that prevent the gelling of UV curable compositions while having minimal impact on curing speed are bis(1-oxy-2,2,6,6-tetramethylpiperidin-4-yl) sebacate (Irgastab® UV 10) and 4-hydroxy-1-oxy-2,2,6,6-tetramethylpiperidine.

The problem underlying the present invention is therefore to provide in-can stabilizers which are radical scavengers that have a high affinity to radicals formed in UV curable resins containing ethylenically unsaturated monomers, oligomers and/or polymers and a photoinitiator during storage without reducing the cure-speed when radiated and which radical scavengers prevent the gelling of UV curable resins and thus increase the storage stability throughout their life cycle from manufacturing to curing compared to the state of art stabilizers, especially in pigmented systems. Some pigments, for instance orange, green and black pigments are known to have a negative influence on the storage stability. A specific problem occurs when Orange 34 is used.

It has now been found that this problem is solved by adding to the ethylenically unsaturated monomer-, oligomer- or polymer molecules compounds from the class of the quinone methides and/or by adding a blend of quinone methides and highly sterically hindered nitroxyl radicals.

The present invention relates to the use of quinone methides of the formula III as in-can stabilizers for UV-curable resins 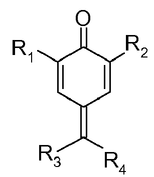 wherein
R₁ and R₂ independently of each other are C₁-C₁₈alkyl, C₅-C₁₂cycloalkyl, C₇-C₁₅phenylalkyl, optionally substituted C₆-C₁₀ aryl;
R₃ and R₄ independently of each other are H, optionally substituted C₆-C₁₀-aryl, 2-,3-,4-pyridyl, 2-,3-furyl or thienyl, COOH, COOR₁₀, CONH₂, CONHR₁₀, CONR₁₀R₁₁, -CN, -COR₁₀, -OCOR₁₀, -OPO(OR₁₀)₂, wherein R₁₀ is C₁-C₈alkyl or phenyl.

The present invention further relates to the use of a blend of
1-99mol% of a stable highly sterically hindered nitroxyl radicals of the formulae I or II 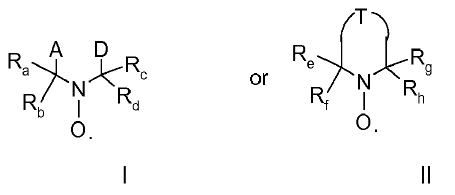 wherein
- Rₐ, R_{b} R_{c}, R_{d}: are independently of each other optionally substituted C₁-C₁₈alkyl or benzyl, optionally substituted C₅-C₁₂cycloalkyl or C₆-C₁₀-aryl; or Rₐ, R_{b} R_{c}, R_{d} together with the carbon atom form a C₅-C₁₂cycloalkyl ring,
- A and D: are groups required to complete the open chain nitroxyl radical;
- Rₑ, R_{f}, R_{g}, Rₕ: are independently of each other optionally substituted C₁-C₁₈alkyl or benzyl, optionally substituted C₅-C₁₂cycloalkyl or C₆-C₁₀-aryl; or Rₑ, R_{f}, Rg, Rₕ together with the carbon atom form a C₅-C₁₂cycloalkyl ring, **with the proviso** that at least one group is different from methyl;
- T: is a group to complete a ring nitroxyl radical, and of
99 to 1mol% of a quinone methide of the formula III according to claim 1 as in-can stabilizer for UV-curable resins.

The stabilizer blend also increases the storage stability of a coating or an ink composition which does not contain a photoinitiator. The storage stabilisation of resins not containing a photoinitiator is especially important if a reactive binder such as an amine acrylate is present.

By the term **"highly sterically hindered"** is meant that ring nitroxyl radicals of the formula II are more hindered than ring nitroxyl radicals having 4 methyl groups in the alpha position to the N-atom, for example more hindered than TEMPO (2,2,6,6-tetramethylpiperidinyl-1-oxy-radical). This condition is expressed by the proviso that at least one group in the alpha position is different from methyl.

Concerning open chain nitroxyl radicals of the formula I the highly sterically hindrance is due to the groups A and/or D.

By the term **"in can stabilizer"** is meant a stabilizer that improves the storage stability.
In-can stabilizers are radical scavengers that have a high affinity to radicals formed in UV curable resins during storage without reducing the cure-speed when radiated. In-can stabilizers prevent the gelling of UV curable resins and thus increase the storage stability throughout their life cycle from manufacturing to curing.

By the term **"UV-curable resin"** is meant a coating or ink which achieves the desired degree of hardness upon exposure to ultraviolet radiation. This occurs due to the presence of a photo initiating compound which absorbs UV light (light of wavelength from about 200 nm to about 600 nm), generates a free radical, and causes polymerization or cross-linking of functional groups on resin monomers, oligomers or polymers.

The UV-curable resins are composed of a monofunctional or multifunctional monomer, oligomer or polymer molecule and a photo initiating compound. Monomers, oligomers or polymers typically used for UV curing have at least one ethylenically unsaturated group like an acrylate or methacrylate functional groups.

The UV curable resin is a pigmented or unpigmented urethane resins, acrylic resins, polyester resins, and epoxy resins. These resins are known in the art. Pigmented systems are preferred.

Among those resins especially inks and overprint varnishes are stabilized. Inks are especially offset inks. Printing ink and overprint varnish formulations are well known. Examples of suitable formulations are described, for example in "Printing Ink and Overprint Varnish Formulations" (2nd Edition), published by William Andrew Publishing/Noyes, 1999, which are incorporated by reference herein.

Suitable photoinitiators are known to those skilled in the art.
For example, α-hydroxyketones and α-aminoketones, phenylglyoxalates or phospinoxides are photoinitiators commonly used in graphic arts applications.

Especially preferred are, for example, the following commercially available photoinitiators:
Darocur 1173: 2-hydroxy-2-methyl-1-phenyl-1-propanone (HMPP) and Oligomeric HMPP,
Irgacure 184: 1-hydroxy-cyclohexyl-phenylketone,
Irgacure 2959: 2-hydroxy-1-[4-(2-hydroxyethoxy)phenyl]-2-methyl-1-propanone,
Irgacure 369: 2-benzyl-2-(dimethylamino)-1-[4-(4-morpholinyl)phenyl]-1-butanone,
Irgacure 1300: Irgacure 369 + Irgacure 651 (benzildimethylketal),
Irgacure 379: 2-(4-Methylbenzyl)-2-(dimethylamino)-1-[4-(4-morpholinyl)phenyl]-1-butanone,
Irgacure 127: 2-Hydroxy-1-{4-[4-(2-hydroxy-2-methyl-propionyl)-benzyl]-phenyl}-2-methyl-propan-1-one,
Irgacure 754: oxo-phenyl-acetic acid 1-methyl-2-[2-(2-oxo-2-phenyl-acetoxy)-propoxy]-ethyl ester,
Irgacure 819: bis(2,4,6-trimethylbenzoyl)-phenylphosphine oxide,
Irgacure 2100: a mixture of Irgacure 819 and Lucerin TPO (2,4,6-Trimethylbenzoyl-phenyl phosphinic acid ethyl ester),
Irgacure 2022: a mixture of Irgacure 819 and Lucerin TPO and Darocur 1173,
Irgacure 250: 4-isobutylphenyl-4'-methylphenyl iodonium hexafluorophosphate,
Darocur ITX: 2-isopropylthioxanthone and 4-isopropylthioxanthone,
Darocur EDB: ethyl-4-dimethylamino benzoate,
Darocur EHA: 2-ethylhexyl-4-dimethylamino benzoate.

The above examples of photoinitiators are not limiting.

Pigments which may be used in the invention include organic and inorganic pigments, alone or in combination. The exact choice of pigments will depend upon the specific application and performance requirements such as color reproduction and image stability. Pigments suitable for use in the present invention include, for example, azo pigments, monoazo pigments, diazo pigments, azo pigment lakes, beta-Naphthol pigments, Naphthol AS pigments, benzimidazolone pigments, diazo condensation pigments, metal complex pigments, isoindolinone and isoindoline pigments, polycyclic pigments, phthalocyanine pigments, quinacridone pigments, perylene and perinone pigments, thioindigo pigments, anthrapyrimidone pigments, flavanthrone pigments, anthanthrone pigments, dioxazine pigments, triarylcarbonium pigments, quinophthalone pigments, diketopyrrolo pyrrole pigments, titanium oxide, iron oxide, and carbon black. Typical examples of pigments which may be used include Color Index (C.I.) Pigment Yellow 1, 2, 3, 5, 6, 10, 12, 13, 14, 16, 17, 62, 65, 73, 74, 75, 81, 83, 87, 90, 93, 94, 95, 97, 98, 99, 100, 101, 104, 106, 108, 109, 110, 111, 113, 114, 116, 117, 120, 121, 123, 124, 126, 127, 128, 129, 130, 133, 136, 138, 139, 147, 148, 150, 151, 152, 153, 154, 155, 165, 166, 167, 168, 169, 170, 171, 172, 173, 174, 175, 176, 177, 179, 180, 181, 182, 183, 184, 185, 187, 188, 190, 191, 192, 193, 194; C.I. Pigment Orange 1, 2, 5, 6, 13, 15, 16, 17, 17:1, 19, 22, 24, 31, 34, 36, 38, 40, 43, 44, 46, 48, 49, 51, 59, 60, 61, 62, 64, 65, 66, 67, 68, 69; C.I. Pigment Red 1, 2, 3, 4, 5, 6, 7, 8, 9, 10, 11, 12, 13, 14, 15, 16, 17, 18, 21, 22, 23, 31, 32, 38, 48:1, 48:2, 48:3, 48:4, 49:1, 49:2, 49:3, 50:1, 51, 52:1, 52:2, 53:1, 57:1, 60:1, 63:1, 66, 67, 68, 81, 95, 112, 114, 119, 122, 136, 144, 146, 147, 148, 149, 150, 151, 164, 166, 168, 169, 170, 171, 172, 175, 176, 177, 178, 179, 181, 184, 185, 187, 188, 190, 192, 194, 200, 202, 204, 206, 207, 210, 211, 212, 213, 214, 216, 220, 222, 237, 238, 239, 240, 242, 243, 245, 247, 248, 251, 252, 253, 254, 255, 256, 258, 261, 264; C.I. Pigment Violet 1, 2, 3, 5:1, 13, 19, 23, 25, 27, 29, 31, 32, 37, 39, 42, 44, 50; C.I. Pigment Blue 1, 2, 9, 10, 14, 15:1, 15:2, 15:3, 15:4, 15:6, 15, 16, 18, 19, 24:1, 25, 56, 60, 61, 62, 63, 64, 66; C.I. Pigment Green 1, 2, 4, 7, 8, 10, 36, 45; C.I. Pigment Black 1, 7, 20, 31, 32, and C.I. Pigment Brown 1, 5, 22, 23, 25, 38, 41, 42. In a preferred embodiment of the invention, the pigment employed is C.I. Pigment Blue 15:3, C.I. Pigment Red 122, C.I. Pigment Yellow 155, C.I. Pigment Yellow 74, bis(phthalocyanylalumino)tetraphenyldisiloxane or C.I. Pigment Black 7.

If desired, the resin composition of the present invention can further contain additives commonly employed in the art.

Furthermore, the invention relates a method for increasing the storage stability of a radiation curable coating composition or ink composition by adding to the coating- or the ink composition, optionally comprising a photoinitiator, an amount of from 0.0001 to 10% by weight, based on the total amount of coating composition or ink composition of an in-can stabilizer as defined in claim 1, or an in-can stabilizer blend as defined in claim 4.

**Radiation** is electromagnetic radiation, such as near infrared (NIR, wavelength range from about 750 nm to about 1500 nm), visible light, UV radiation or X-radiation, especially UV radiation, and corpuscular radiation such as electron beams.

The stabilizer is added in an amount of from 0.0001 to 10% by weight, based on the total amount of coating composition or ink composition, preferably 0.01 to 5%.

Highly sterically hindered nitroxyl radicals and quinone methides as well as acrylic resins containing them are known per se and are described for various applications in the prior art.

A well known application is the use as flame retardant. WO03/054073 WO03/07605 and WO 03/085039 describe acrylic resins containing highly sterically nitroxyl radicals and their use as flame retardants. The use to increase the storage stability is not disclosed therein.

US 6,518,326 (Ciba) relates to compounds of formulae 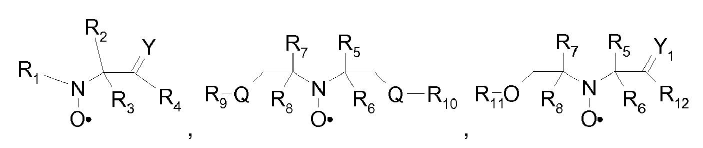 These compounds may be used together with a radical source to effect polymerization of ethylenically unsaturated monomers or oligomers.

WO96/24620 (Elf Atochem) describes compounds of the formula 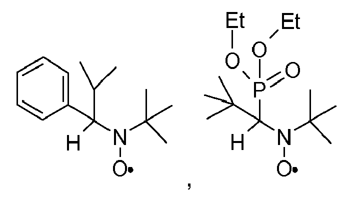 used for controlled polymerization of ethylenically unsaturated monomers.

US 6,353,107 (Ciba describes sterically highly hindered piperidine nitroxides 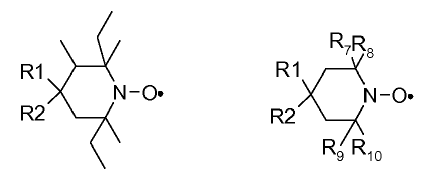 used for controlled polymerisation.

WO20022048205 (Ciba) describes compounds of the formula 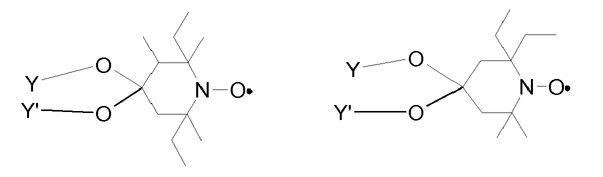 used for controlled polymerisation.

US6,479,608 (Ciba) describes compounds of the formulae 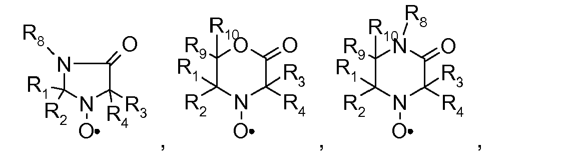 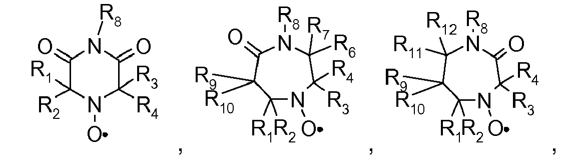 used for controlled polymerisation.

EP 744392 (Ciba) describes quinone methide compounds and their preparation.

In one aspect the invention the blend according to claim 4 comprises open chain stable highly sterically hindered nitroxyl radicals of the formulae Ia-Ie 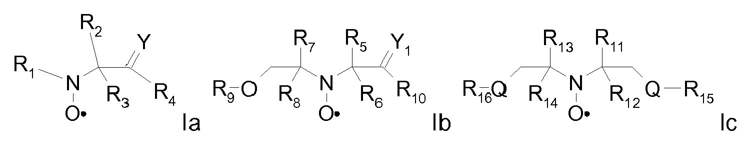 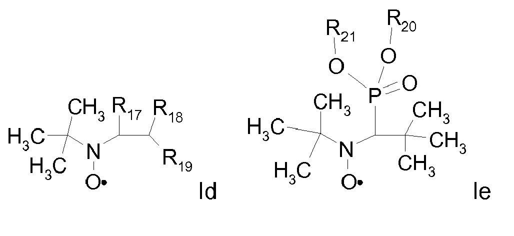 wherein

**in formula Ia**
- Y: is O or CH₂;
- **R**₁: is tertiary C₄-C₁₈alkyl or C₆-C₁₀aryl, which are unsubstituted or substituted by halogen, OH, COO**R**₅₁ or C(O)-**R**₅₂ wherein **R**₅₁ is hydrogen, an alkali metal atom or C₁-C₁₈alkyl and **R**₅₂ is C₁-C₁₈alkyl; or
- **R**₁: is C₅-C₁₂cycloalkyl, C₅-C₁₂cycloalkyl which is interrupted by at least one O or N atom, a polycyclic alkyl radical or a polycyclic alkyl radical which is interrupted by at least one O or N atom;
- **R**₂ **and R**₃: are independently optionally substituted C₁-C₁₈alkyl, benzyl, C₅-C₁₂cycloalkyl or C₆-C₁₀aryl; or together with the carbon atom form a C₅-C₁₂cycloalkyl ring;
if Y is O,
- **R**₄: is OH, O(alkali-metal) C₁-C₁₈alkoxy, benzyloxy, N**R**₅₃**R**₅₄, wherein **R**₅₃ and **R**₅₄ are independently from each other hydrogen, C₁-C₁₈alkyl or C₆-C₁₀aryl, which are unsubstituted or substituted by halogen, OH, COO**R**₅₁ or C(O)-**R**₅₂, wherein R₅₁ and R₅₂ is as defined above;
if Y is CH₂,
- **R**₄: is OH, C₁-C₁₈alkoxy, benzyloxy, O-C(O)-(C₁-C₁₈)alkyl or N**R**₅₃**R**₅₄, wherein R₅₃ and R₅₄ is as defined above;
**in formula Ib**
- Y₁: is O or CH₂;
- **R**₅, **R**₆, **R**₇ and **R**₈: are independently of each other optionally substituted C₁-C₁₈alkyl, benzyl, C₅-C₁₂cycloalkyl or C₆-C₁₀aryl, with the proviso that not more than two are aryl; or
- **R**₅ **and R**₆: and/or **R**₇ and **R**₈ together with the carbon atom form a C₅-C₁₂cycloalkyl ring;
- **R**₉: is formyl, C₂-C₁₈alkylcarbonyl, benzoyl, C₁-C₁₈alkyl, C₅-C₁₂cycloalkyl, C₅-C₁₂cycloalkyl which is interrupted by at least one O or N atom, benzyl or C₆-C₁₀aryl, which are unsubstituted or substituted by halogen, OH, COO**R**₅₁ or C(O)-**R**₅₂, wherein R₅₁ and R₅₂ is as defined above;
if Y₁ is O
- **R**₁₀: is OH, O(alkali-metal) C₁-C₁₈alkoxy, benzyloxy, N**R**₅₃**R**₅₄, wherein **R**₅₃ and **R**₅₄ are as defined above;
if Y₁ is CH₂
- **R**₁₀: is a group C(O)**R**₅₅, wherein **R**₅₅ is OH, C₁-C₁₈alkoxy, benzyloxy, N**R**₅₃**R**₅₄, wherein **R**₅₃ and **R**₅₄ are as defined above;
**in formula Ic**
- **Q**: is O or NH or N-C₁-C₁₈alkyl;
- **R**₁₁, **R**₁₂, **R**₁₃ and **R**₁₄: are independently of each other optionally substituted C₁-C₁₈alkyl, benzyl, C₅-C₁₂cycloalkyl or C₆-C₁₀aryl, with the proviso that not more than two are aryl;
or
- **R**₁₁ and **R**₁₂: and/or **R**₁₃ and **R**₁₄ together with the carbon atom form a C₅-C₁₂cycloalkyl ring;
- **R**₁₅ and **R**₁₆: are independently from each other hydrogen, formyl, C₂-C₁₈alkylcarbonyl, benzoyl, C₁-C₁₈alkyl, C₅-C₁₂cycloalkyl, C₅-C₁₂cycloalkyl which is interrupted by at least one O or N atom, benzyl or C₆-C₁₀aryl which are unsubstituted or substituted by halogen, OH, COOR₅₁ or C(O)-R₅₂, wherein R₅₁ and R₅₂ is as defined above;
**in formula Id**
- **R**₁₇: is C₆-C₁₀aryl;
- **R**₁₈ and **R**₁₉: independently of one another are hydrogen or C₁-C₄alkyl;
**in formula Ie**
- **R**₂₀ and **R**₂₁: independently of one another are hydrogen or C₁-C₄alkyl;

In another aspect the invention relates to the use of stable highly sterically hindered ring-nitroxyl radicals of the formula IIa-IId 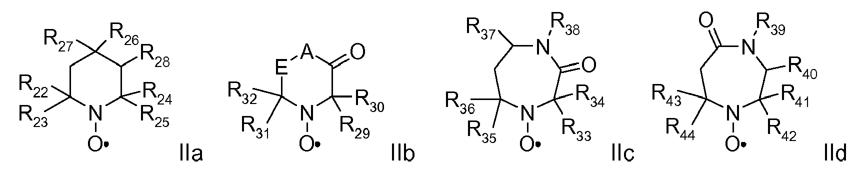 wherein

**in formula IIa**
- **R**₂₂, **R**₂₃, **R**₂₄, **R**₂₅: are independently of each other C₁-C₄alkyl with the proviso that at least one group is different from methyl; or R₂₂ and R₂₃ and/or R₂₄ and R₂₅ form together with the C-atom to which they are bound a C₅-C₈ cycloalkyl ring;
- **R**₂₆, **R**₂₇: are independently of each other H or C₁-C₁₈alkoxy;if R₂₆ is H, R₂₇ is additionally OH, -O-(C₁-C₁₈)acyl, -NH**R**₅₆ or N(R₄₆)₂, wherein **R**₅₆ is H, C₁-C₁₈alkyl, C₅-C₇cycloalkyl, C₇-C₉phenylalkyl, C₆-C₁₀aryl or C₁-C₁₈acyl; or **R**₂₆ and **R**₂₇ together with the C-atom to which they are bonded form a cyclic ketale group 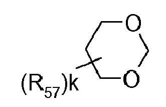 or 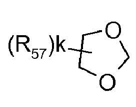 wherein k is 0, 1 or 2 and **R**₅₇ is C₁-C₁₈alkyl, -CH₂-OH, -CH₂-O-(C₁-C₁₈)alkyl or -CH₂-O-(C₁-C₁₈)acyl; if k is 2, then the two R₄₇ group may be different;
or **R**₂₆ **and R**₂₇ together form the group =O, =N-O-**R**₅₈ or =N-N-**R**₅₉**R**₆₀, wherein R₅₈, R₅₉, **R**₆₀ independently are H, C₁-C₁₈alkyl, C₅-C₇cycloalkyl, C₇-C₉phenylalkyl, C₆-C₁₀aryl or C₁-C₁₈acyl;
- R₂₈: is hydrogen or methyl;
**in formula IIb**
- A: is O and **E** is -CH₂- or A is N**R**₆₁ and E is -C(O)-, -CH₂- or a direct bond; wherein **R**₆₁ is H, C₁-C₁₈alkyl, C₅-C₈cycloalkyl, C₇-C₉phenylalkyl, C₆-C₁₀aryl or C₁C₁₈acyl;
- **R**₂₉, **R**₃₀, **R**₃₁, **R**₃₂: are independently of each other C₁-C₄alkyl; or R₂₉ and R₂₀ and/or R₃₁ and R₃₂ form together with the C-atom to which they are bound a C₅-C₈ cycloalkyl ring; or R₂₉, R₃₀, R₃₁, R₃₂ can have inserted oxygen or bear functional groups to give compounds like 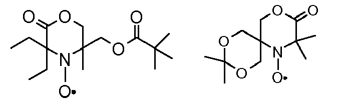 **in formula IIc**
- **R**₃₃, **R**₃₄, **R**₃₅, **R**₃₆: are independently of each other C₁-C₄alkyl; or R₃₃ and R₃₄ and/or R₃₅ and R₃₆ form together with the C-atom to which they are bound a C₅-C₈ cycloalkyl ring; or **R**₃₃, **R**₃₄, **R**₃₅, **R**₃₆ can have inserted oxygen or bear functional groups to give compounds like 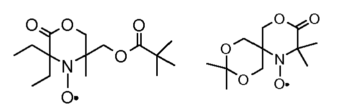
- R₃₇: is H, C₁-C₁₈alkyl, C₅-C₇cycloalkyl, C₇-C₉phenylalkyl, C₆-C₁₀aryl or C₁-C₁₈acyl;
- R₃₈: is H, C₁-C₄ alkyl;
**in formula IId**
- R₃₉: is H, C₁-C₁₈alkyl, C₅-C₇cycloalkyl, C₇-C₉phenylalkyl, C₆-C₁₀aryl or C₁C₁₈acyl;
- R₄₀: is H, C₁-C₄ alkyl;
- R₄₁, R₄₂, R₄₃, R₄₄: are independently of each other C₁-C₄alkyl; or R33 and R34 and/or R₃₅ and R₃₆ form together with the C-atom to which they are bound a C₅-C₈ cycloalkyl ring.

### Definitions

Halogen is Fluorine, Chlorine, Bromine or Iodine, preferably Chlorine or Bromine.

The alkyl radicals in the various substituents may be linear or branched. Examples of alkyl containing 1 to 18 carbon atoms are methyl, ethyl, propyl, isopropyl, butyl, 2-butyl, isobutyl, t-butyl, pentyl, 2-pentyl, hexyl, heptyl, octyl, 2-ethylhexyl, t-octyl, nonyl, decyl, undecyl, dodecyl, tridecyl, tetradecyl, hexadecyl and octadecyl.
C₅-C₁₂cycloalkyl is typically, cyclopentyl, methylcyclopentyl, dimethylcyclopentyl, cyclohexyl, methylcyclohexyl.

Cycloalkyl which is interrupted by at least one O or N atom is for example 2-tetrahydropyranyl, tetrahydrofurane-yl, 1,4 dioxan-yl, pyrrolidin-yl, tetrahydrothiophen-yl, pyrazolidin-yl, imidazolidin-yl, butyrolactone-yl, caprolactame-yl

Substituted C₁-C₁₈alkyl or benzyl, substituted C₅-C₁₂cycloalkyl or C₆-C₁₀-aryl which are substituted by C₁-C₁₂alkyl, halogen, C₁-C₁₂alkoxy, OH, COO**R**₅₁, C(O)-**R**₅₂ or -O-CO-**R**_{52;} wherein **R**₅₁ is hydrogen, an alkali metal atom or C₁-C₁₈alkyl and **R**₅₂ is C₁-C₁₈alkyl.

Examples for alkali metal are lithium, sodium or potassium.

C₁-C₁₈ alkoxy is for example methoxy, ethoxy, propoxy, butoxy, pentoxy, octoxy, dodecyloxy or octadecyloxy.

C₂-C₁₈ alkylcarbonyl is for example acetyl, propionyl, butyryl, pentylcarbonyl, hexylcarbonyl or dodecylcarbonyl.

An acyl residue is derived from an aliphatic, cycloaliphatic or aromatic monocarboxylic acid having up to 18 carbon atoms.

The C₆-C₁₀aryl groups are phenyl or naphthyl, preferrably phenyl.

Polycyclic alkyl radicals which may also be interrupted by at least one oxygen or nitrogen atom are for example adamantane, cubane, twistane, norbornane, bycyclo[2.2.2]octane bycyclo[3.2.1]octane, hexamethylentetramine (urotropine) or a group

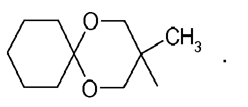

### Preferences

Preferred are:
**in formula Ia**
- Y: is O;
- **R**₁: is tertiary C₄-C₁₈alkyl; or C₅-C₁₂cycloalkyl or C₅-C₁₂cycloalkyl which is interrupted by at least one O or N atom;
- **R**₂ and **R**₃: are independently C₁-C₁₈alkyl; or together with the carbon atom form a C₅-C₆cycloalkyl ring;
- **R**₄: is C₁-C₁₈alkoxy, benzyloxy or N**R**₅₃**R**₅₄, wherein **R**₅₃ and **R**₅₄ are independently from each other hydrogen, C₁-C₁₈alkyl;
**in formula Ib**
- Y₁: is O;
- **R**₅, **R**₆, **R**₇: and **R**₈ are independently of each other C₁-C₁₈alkyl; or
- **R**₅ and **R**₆ and/or **R**₇ and **R**₈: together with the carbon atom form a C₅-C₆cycloalkyl ring;
- **R**₉: is formyl, C₂-C₈alkylcarbonyl, benzoyl, C₁-C₁₈alkyl, benzyl or phenyl;
- **R**₁₀: is C₁-C₁₈alkoxy, benzyloxy, N**R**₅₃**R**₅₄, wherein **R**₅₃ and **R**₅₄ are as defined above;
**in formula Ic**
- **Q**: is O;
- **R**₁₁, **R**₁₂, **R**₁₃ and **R**₁₄: are independently of each other C₁-C₁₈alkyl or phenyl; or
- **R**₁₁ and **R**₁₂ and/or **R**₁₃ and **R**₁₄: together with the carbon atom form a C₅-C₆cycloalkyl ring;
- **R**₁₅ and **R**₁₆: are independently from each other formyl, C₂-C₁₈alkylcarbonyl, benzoyl, C₁-C₁₈alkyl, benzyl or phenyl;
**in formula Id**
- **R**₁₇: is phenyl;
- **R**₁₈ and **R**₁₉: independently of one another are C₁-C₄alkyl;
**in formula Ie**
- **R**₂₀ and **R**₂₁: independently of one another are C₁-C₄alkyl;
**in formula IIa**
- **R**₂₂, **R**₂₃, **R**₂₄, **R**₂₅: are independently C₁-C₄alkyl with the proviso that at least one group is different from methyl;
- **R**₂₆, **R**₂₇: are independently H or C₁-C₁₈alkoxy; if R₂₆ is H, R₂₇ is additionally OH, -O-(C₁-C₁₈)acyl, -NH-C₁-C₁₈alkyl; or **R**₂₆ and **R**₂₇ together with the C-atom to which they are bonded form a cyclic ketale group

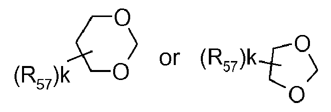

- wherein: k is 0, 1 or 2 and **R**₅₇ is C₁-C₁₈alkyl, -CH₂-OH, -CH₂-O-(C₁-C₁₈)alkyl or -CH₂-O-(C₁-C₁₈)acyl; if k is 2, then the two R₄₇ group may be different;
or **R**₂₆ and **R**₂₇ together form the group =O;
- R₂₈: is hydrogen or methyl;
**in formula IIb**
- **A**: is O and E is -CH₂- or A is N**R**₆₁ and E is -CH₂- or a direct bond; wherein **R**₆₁ is H, C₁-C₁₈alkyl, C₅-C₈cycloalkyl or C₇-C₉phenylalkyl;
- **R**₂₉, **R**₃₀, **R**₃₁, **R**₃₂: are independently of each other C₁-C₄alkyl; or R₂₉ and R₂₀ and/or R₃₁ and R₃₂ form together with the C-atom to which they are bound a C₅-C₈ cycloalkyl ring; or R₂₉, R₃₀, R₃₁, R₃₂ can have inserted oxygen or bear functional groups to give compounds like 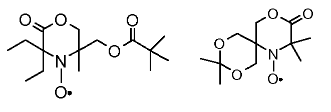
**in formula IIc**
- **R**₃₃, **R**₃₄, **R**₃₅, **R**₃₆: are independently of each other C₁-C₄alkyl; or R₂₉ and R₂₀ and/or R₃₁ and R₃₂ form together with the C-atom to which they are bound a C₅-C₈ cycloalkyl ring; or R₂₉, R₃₀, R₃₁, R₃₂ can have inserted oxygen or bear functional groups to give compounds like 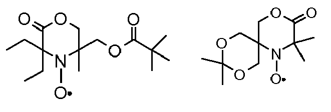
- R₃₇: is H, C₁-C₁₈alkyl;
- R₃₈: is H, C₁-C₄ alkyl;
**in formula IId**
R₃₉ is H, C₁-C₁₈alkyl;
R₄₀ is C₁-C₄ alkyl;
R₄₁, R₄₂, R₄₃, R₄₄ are independently of each other C₁-C₄alkyl;
**in formula III**
R₁ and R₂ are tert. butyl;
R₃ is H;
R₄ is optionally substituted phenyl, COOH, COOR₁₀, CONH₂, CONHR₁₀, CONR₁₀R₁₁, -CN, - COR₁₀, -OCOR₁₀, -OPO(OR₁₀)₂, wherein R₁₀ is C₁-C₈alkyl or phenyl.

Especially preferred are:
**in formula Ia**
- Y: is O;
- **R**₁: is tertiary C₄-C₈alkyl;
- **R**₂ and **R**₃: are independently of each other methyl or ethyl; or together with the carbon atom form a C₅-C₆cycloalkyl ring;
- **R**₄: is C₁-C₁₈alkoxy or NH-C₁-C₁₈alkyl;
**in formula Ib**
- Y₁: is O;
- **R**₅, **R**₆, **R**₇ and **R**₈: are independently of each other methyl or ethyl; or
- **R**₅ and **R**₆ and/or **R**₇ and **R**₈: together with the carbon atom form a C₅-C₆cycloalkyl ring;
- **R**₉: C₂-C₈alkylcarbonyl, benzoyl, C₁-C₁₈alkyl or benzyl;
- **R**₁₀: is C₁-C₁₈alkoxy or NH-C₁-C₁₈alkyl;
**in formula Ic**
- **Q**: is O;
- **R**₁₁, **R**₁₂, **R**₁₃ and **R**₁₄: are independently of each other methyl or ethyl or phenyl; or
- **R**₁₁ and **R**₁₂ and/or **R**₁₃ and **R**₁₄: together with the carbon atom form a C₅-C₆cycloalkyl ring;
- **R**₁₅ and **R**₁₆: are independently from each other C₂-C₈alkylcarbonyl, benzoyl, C₁-C₈alkylor benzyl;
**in formula Id**
- **R**₁₇: is phenyl;

- **R**₁₈ and **R**₁₉: independently of one another are methyl or ethyl;
**in formula Ie**
- **R**₂₀ and **R**₂₁: independently of one another are methyl or ethyl;
**in formula IIa**
- **R**₂₂ and **R**₂₄ are methyl and **R**₂₃, and **R**₂₅: are ethyl;
- **R**₂₆, **R**₂₇: are independently H or C₁-C₁₈alkoxy; if R₂₆ is H, R₂₇ is additionally OH; or **R**₂₆ **and R**₂₇ together with the C-atom to which they are bonded form a cyclic ketale group 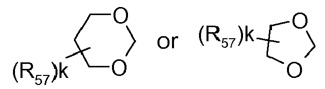 wherein k is 0, 1 or 2 and **R**₄₇ is C₁-C₁₈alkyl, -CH₂-OH, -CH₂-O-(C₁-C₁₈)alkyl or -CH₂-O-(C₁-C₁₈)acyl; if k is 2, then the two R₄₇ group may be different;
or **R₂₆ and R₂₇** together form the group =O;
- R₂₈: is hydrogen or methyl;
**in formula IIb**
- **A**: is O and **E** is -CH₂- or A is NH or N-C₁-C₁₈alkyl;
- **R**₂₉, **R**₃₀, **R**₃₁, **R**₃₂: are independently of each other are methyl or ethyl; or R₂₉ and R₂₀ and/or R₃₁ and R₃₂ form together with the C-atom to which they are bound a C₅-C₆ cycloalkyl ring;
**in formula IIc**
- **R**₃₃, **R**₃₄, **R**₃₅, **R**₃₆: are independently of each other methyl or ethyl; or R₂₉ and R₂₀ and/or R₃₁ and R₃₂ form together with the C-atom to which they are bound a C₅-C₆ cycloalkyl ring;
- R₃₇: is H, C₁-C₁₈alkyl;
- R₃₈: is H;
**in formula IId**
R₃₉ is H;
R₄₀ is methyl;
R₄₁, R₄₂, R₄₃, R₄₄ are independently of each other methyl or ethyl.

### Preparation

The compounds of the formula Ia, Ib and Ic can be prepared by known methods. The methods are described in US6,518,326 (Ciba).

The compounds of the formula Id and le are can be prepared as described in WO96/24620.

The compounds of the formula IIa can be prepared as described in US6,353,107 (Ciba). The compounds of the formula IIa having a cyclic ketal group can be prepared as described in WO20022048205 (Ciba).

The compounds of the formula IIb, IIc and IId can be prepared as described in US6,479,608 (Ciba)

The compound of formula III can be prepared as described in EP 744392 (Ciba)

### Examples:

**a) prepared according to** US6,518,326
**Formula Ia**

tert-butyl-(dimethyl-methylaminocarbonyl-methyl)-amine-N-oxyl

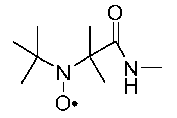

tert-butyl-(dimethyl-tert-butylaminocarbonyl-methyl)-amine-N-oxyl

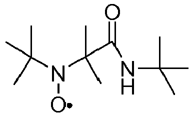

tert-butyl-(dimethyl-n-butylaminocarbonyl-methyl)-amine-N-oxyl

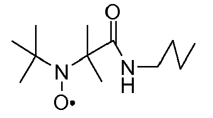

tert-butyl-(dimethyl-methoxycarbonyl-methyl)-amine-N-oxyl

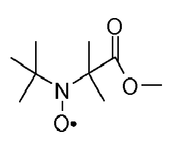

tert-butyl-(tert-butylaminocarbonyl-cyclopentyliden-methyl)-amine-N-oxyl 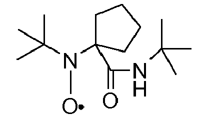 **Formula Ib**

(dimethyl-acetoxymethyl-methyl)-(dimethyl-propylaminocarbonyl-methyl)-amine-N-oxyl

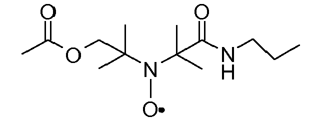

(dimethyl-ethoxymethyl-methyl)-(dimethyl-ethoxycarbonyl-methyl)-amine-N-oxyl 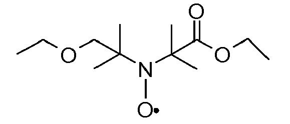 **Formula Ic**

bis-(dimethyl-acetoxymethyl-methyl)-amine-N-oxyl

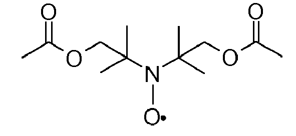

N-(2-benzyloxy-1,1-dimethyl-ethyl)-N'-(1-benzyloxymethyl-1-phenyl-propyl)-amine-N-oxyl

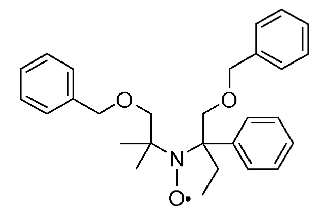

bis-(dimethyl-benzoyloxymethyl-methyl)-amine-N-oxyl

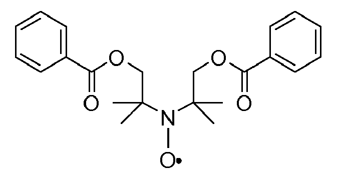

**b) prepared according to** W096724620
**Formula Id**

tert-butyl-(1-phenyl-2-methyl-propyl)-amine-N-oxyl 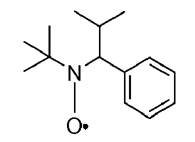 **Formula Ie**

tert-butyl-(1-dietylphosphono-2,2-dimethyl)-amine-N-oxyl

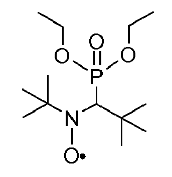

**c) prepared according to** US6,353,107
**Formula IIa**

2,6-diethyl-2,3,6-trimethyl-piperidine-1-oxyl

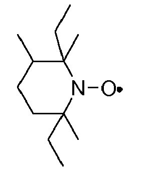

2,2,6-trimethyl-6-ethyl-piperidine-1-oxyl

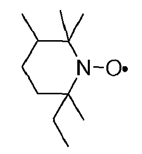

2,6-diethyl-2,3,6-trimethyl-4-hydroxypiperidine-1-oxyl

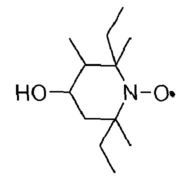

2,2,6-trimethyl-6-ethyl-4-hydroxypiperidine-1-oxyl

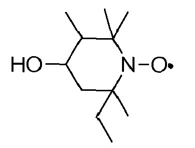

2,2,3-dimethyl-6,6-diethyl-4-hydroxypiperidine-1-oxyl

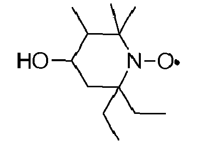

2,6-dipropyl-2,6-dimethyl-3-ethyl-4-hydroxypiperidine

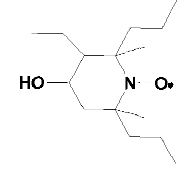

2,6-diethyl-2,3,6-trimethyl-4-propyloxypiperidine-1 oxyl

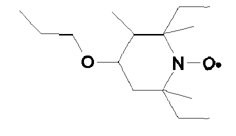

2,6-diethyl-2,3,6-trimethyl-4-lauroyloxypiperidine-1-oxyl

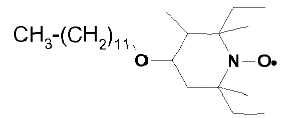

2,2-dimethyl-6,6-diethyl-4-stearoyloxypiperidine-1-oxyl

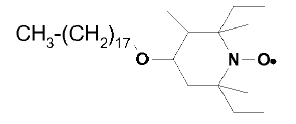

2,2-dimethyl-6,6-diethyl-4-benzoyloxypiperidine-1-oxyl

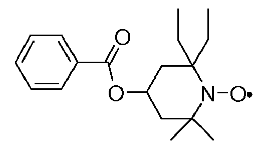

2,6-diethyl-2,3,6-trimethyl-4-oxopiperidine-1-oxyl

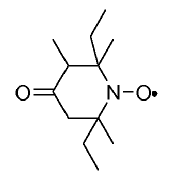

2,6-dipropyl-2,6-dimethyl-3-ethyl-4-oxypiperidine-1-oxyl

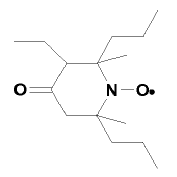

**d) prepared according to** WO2002048205**,**
**Formula IIa**

2,6-diethyl-4,4-dimethoxy-2,3,6-trimethyl-piperidin-1-oxyl

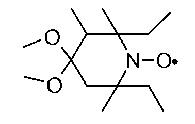

4,4-diethoxy-2,6-diethyl-2,3,6-trimethyl-piperidin-1-oxyl

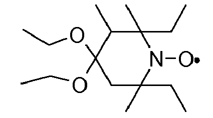

2,6-Ddethyl-2,3,6-trimethyl-4,4-dipropoxy-piperidin-1-oxyl

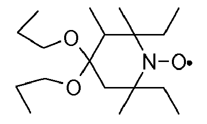

4,4-Dibutoxy-2,6-diethyl-2,3,6-trimethyl-piperidin-1-oxyl

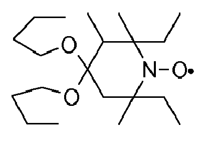

2,6-diethyl-4,4-diisobutoxy-2,3,6-trimethyl-piperidin-1-oxyl

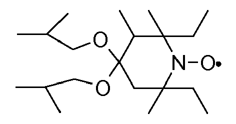

2,6-diethyl-2,3,6-trimethyl-4,4-bis-octyloxy-piperidin-1-oxyl

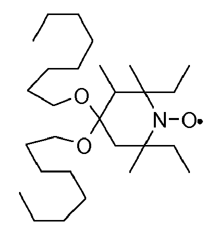

4,4-bis-allyloxy-2,6-diethyl-2,3,6-trimethyl-piperidin-1-oxyl

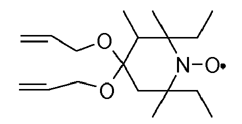

4,4-bis-cyclohexyloxy-2,6-diethyl-2,3,6-trimethyl-piperidin-1-oxyl

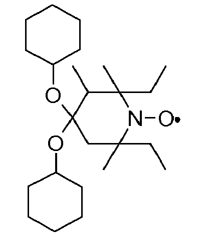

4,4-bis-benzyloxy-2,6-diethyl-2,3,6-trimethyl-piperidin-1-oxyl

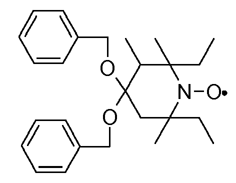

7,9-Diethyl-6,7,9-trimethyl-1,4-dioxa-8-aza-spiro[4.5]decan-8-oxyl

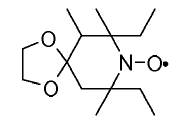

7,9-Diethyl-2,6,7,9-tetramethyl-1,4-dioxa-8-aza-spiro[4.5]decan-8-oxyl

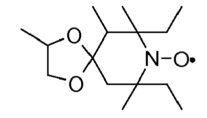

7,9-Diethyl-2-hydroxymethyl-6,7,9-trimethyl-1,4-dioxa-8-aza-spiro[4.5]decan-8-oxyl

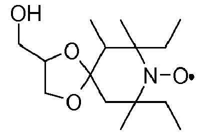

8,10-Diethyl-7,8,10-trimethyl-1,5-dioxa-9-aza-spiro[5.5]undecan-9-oxyl

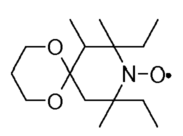

8,10-Diethyl-3,3,7,8,10-pentamethyl-1,5-dioxa-9-aza-spiro[5.5]undecan-9-oxyl

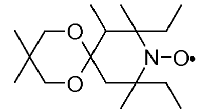

2,4-Diethyl-1,2,4-trimethyl-7,16-dioxa-3-aza-dispiro[5.2.5.2]hexadec-11-en-3-oxyl

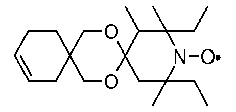

8,10-Diethyl-3-hydroxymethyl-3,7,8,10-tetramethyl-1,5-dioxa-9-aza-spiro[5.5]undecan-9-oxyl

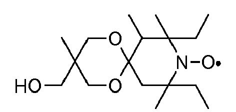

acetic acid 3,8,10-triethyl-7,8,10-trimethyl-1,5-dioxa-9-aza-spiro[5.5]undec-3-yl-methyl ester-9-oxyl

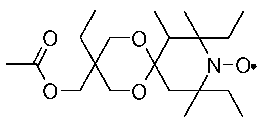

octadecanoic acid 3,8,10-triethyl-7,8,10-trimethyl-1,5-dioxa-9-aza-spiro[5.5]undec-3-ylmethyl ester-9-oxyl

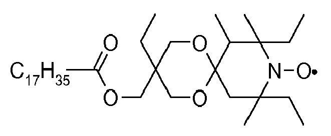

Formula IIb prepared according to US6,479,608, 2,2,5,5-tetraethylimidazolidine-4-on-1-oxyl

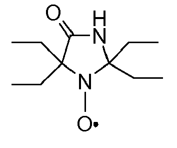

3-ethyl-3,3,5-trimethylmorpholin-2-on-4-oxyl

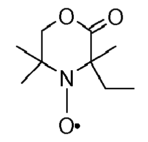

3,3-diethyl-5,5-dimethylmorpholin-2-on-4-oxyl

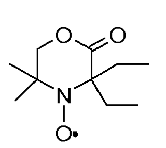

3,3,5,5-tetraethyl-morpholin-2-on-4-oxyl

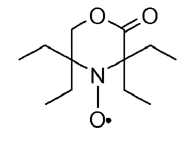

3,3,5-trimethyl-5-pivaloyloxymethylmorpholin-2-on-4-oxyl

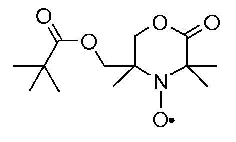

3,3-diethyl-5-methyl-5-pivaloyloxymethylmorpholin-2-on-4-oxyl

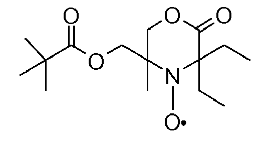

3,3,5-triethyl-5-pivaloyloxymethylmorpholin-2-on-4-oxyl

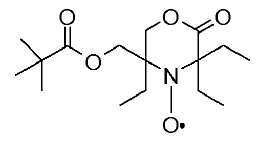

3,3-diethyl-5,5,6,6-tetramethylpiperazine-2-on-4-oxyl

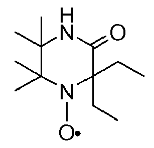

1-isopropyl-3-ethyl-3,5,5-trimethylpiperazine-2-on-4-oxyl

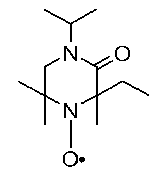

1-isopropyl-3,3-diethyl-5,5-dimethylpiperazine-2-on-4-oxyl

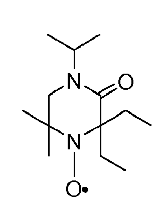

1-t-butyl-3,3-diethyl-5,5-dimethylpiperazine-2-on-4-oxyl

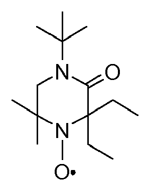

1-t-butyl-3-ethyl-3,5,5-trimethyl-piperazin-2-on-4-oxyl

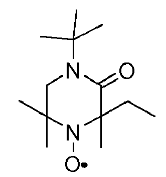

1-t-butyl-3,5-diethyl-3,5-dimethyl-piperazin-2-on-4-oxyl

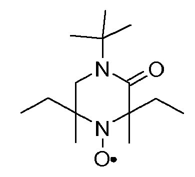

1-t-butyl-5,5-diethyl-3,3-dimethyl-piperazin-2-on-4-oxyl

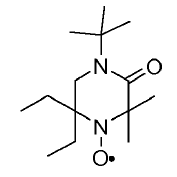

1-t-butyl-3,5,5-triethyl-3-methyl-piperazin-2-on-4-oxyl

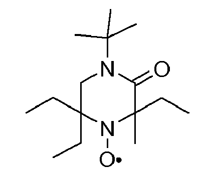

1-t-butyl-3,3,5-triethyl-5-methyl-piperazin-2-on-4-oxyl

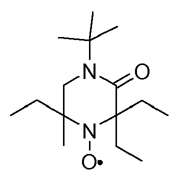

1-t-Butyl-3,3,5,5-tetraethyl-piperazin-2-on-4-oxyl

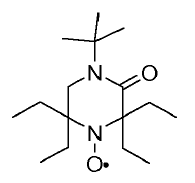

1-t-butyl-3,3-cyclohexyliden-5,5-diethyl-piperazin-2-on-4-oxyl

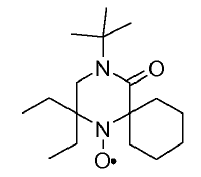

1-t-butyl-3,3-dipropyl-5,5-dimethyl-piperazin-2-on-4-oxyl

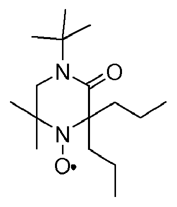

1-t-butyl-3, 3-d i propyl-5, 5-d iethyl-pi perazi n-2-on-4-oxyl

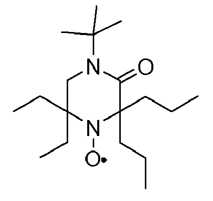

1-t-butyl-3, 3-d i butyl-5, 5-d i methyl-pi perazi n-2-on-4-oxyl

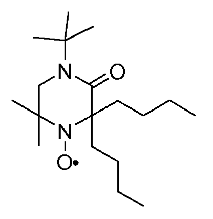

1-t-octyl-3, 3-d i ethyl-5, 5-d i methyl-pi perazi n-2-on-4-oxyl

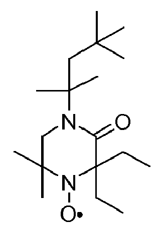

1-(2-hydroxyethyl)-3,3-diethyl-5,5-dimethyl-piperazin-2-on-4-oxyl

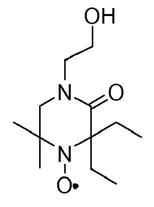

1-(1,1-dimethyl-2-hydroxyethyl)-3,3-diethyl-5,5-dimethyl-piperazin-2-on-4-oxyl

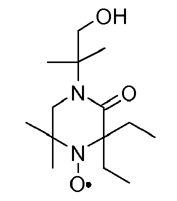

1-phenyl-3,3-diethyl-5,5-dimethyl-piperazin-2-on-4-oxyl

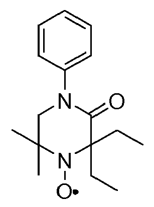

1-methyl-3,3-diethyl-5,5-dimethyl-piperazin-2-on-4-oxyl

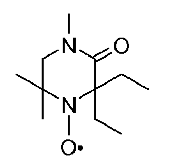

1-t-butyl-3-isobutyl-3,5,5-trimethyl-piperazin-2-on-4-oxyl 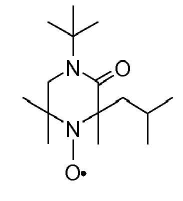 **Formula IIc**

1-butyl-3,3,5,5,7-pentamethyl-[1,4]diazepan-2-one-4-oxyl

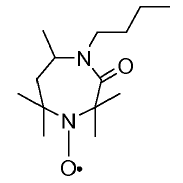

1-butyl-3-ethyl-3,5,5,7-tetramethyl-[1,4]diazepan-2-one-4-oxyl 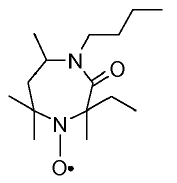 **Formula IId**

2,3,7-trimethyl-2,7-diethyl-[1,4]diazepan-5-one-1-oxyl

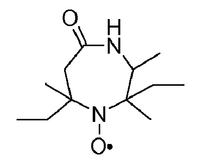

2,3,4,7-tetramethyl-2,7-diethyl-[1,4]diazepan-5-one-1-oxyl

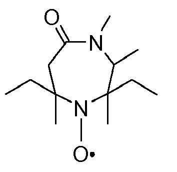

2,3,7-trimethyl-2,7-diethyl-4-t-butyloxycarbonyl-[1,4]diazepan-5-one-1-oxyl

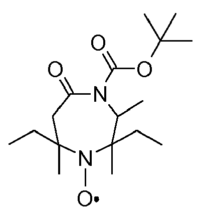

4-benzyl-2,3,7-trimethyl-2,7-diethyl-[1,4]diazepan-5-one-1-oxyl 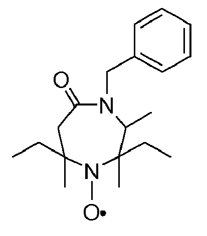 **Formula III**

4-Benzylidene-2,6-di-tert-butyl-cyclohexa-2,5-dienone and (3,5-Di-tert-butyl-4-oxo-cyclohexa-2,5-dienylidene)-acetonitrile

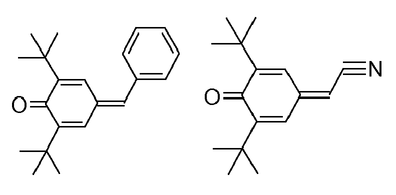

### Application examples

Preparation of the tested in-can stabilizers

a) compound of the formula IIa, prepared according to US6,353,107

### Example 1

2,6-diethyl-2,3,6-trimethyl-4-hydroxypiperidine-1-oxyl

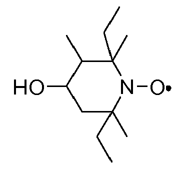

To a solution of 118.2g (0.6mol) 2,6-diethyl-2,3,6-trimethyl-4-oxopiperidine in 1000ml ethanol 18.2g (0.4 mol) sodium borohydride are added in portions and the temperature is kept below 30 °C. Subsequently the solution is stirred for 2 hours at 50°C. Ethanol is distilled off, 500 ml water are added to the residue which is subsequently extracted several times with CH₂Cl₂. The extract is dried over Na₂SO₄ and the solution is filtered. After removing the solvent 116g (97%) 2,6-diethyl-2,3,6-trimethyl-4-hydroxypiperidin are obtained as yellowish liquid.
Elemental analysis calculated for C₁₂H₂₅NO: C 72,31%; H 12.64%; N 7.03%. Found: C 71.44%; H 12.71%; N 6.87%.

To a solution of 25.7g (0.13 mol) 2,6-diethyl-2,3,6-trimethyl-4-hydroxypiperidine in 120 ml tetrahydrofurane a solution of a solution of 54.5g (0.22 mol) m-chlor-perbenzoic acid (70%) in 230 ml tetrahydrofurane is droppwise added under stirring within 2 hours at 0°C. The red to brown solution is stirred over night at room temperature and 500 ml hexane, are added. The solution is neutralized by shaking several times with 1 N NaHCO₃ and finally with water. The solvent is evaporated and 27.0g (97%) 2,6-diethyl-2,3,6-trimethyl-4-hydroxypiperidine-1-oxyl are obtained as red liquid.
Elemental analysis calculated for C₁₂H₂₄NO₂: C 67.25%; H 11.29%; N 6.54%. Found: C 67.10%; H 11.42%; N 6.68%.

### Example 2

2,6-diethyl-2,3,6-trimethyl-4-oxopiperidine-1-oxyl 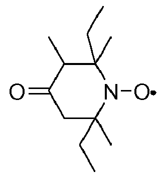 2,6-diethyl-2,3,6-trimethyl-4-oxopiperidine is prepared in analogy to example 1 by oxidizing 16g (0.08 mol) 2,6-diethyl-2,3,6-trimethyl-4-oxopiperidine with m-chlor-perbenzoic acid. 10g 2,6-diethyl-2,3,6-trimethyl-4-oxypiperidine-1-oxyl are obtained as red liquid.
Elemental analysis calculated for C₁₂H₂₂NO₂: C 67.89%; H 10.44%; N 6.60%. Found: C 68.00%; H 10.42%; N 6.61%.

b) compounds of the formula IIa prepared according to WO20002048205

### Example 3

7,9-Diethyl-6,7,9-trimethyl-1,4-dioxa-8-aza-spiro[4.5]decan-8-oxyl

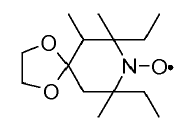

According to Example 5 in US4,105,626 8-aza-6,7,9-trimethyl-7,9-diethyl-1,4-dioxaspiro [4.5]decane are dissolved in 100 ml methylene chloride. Into this solution is dropped a solution of 42.6 g of m-chloroperbenzoic acid in 300 ml methylene chloride within 2 hours. The reaction mixture becomes red and m-chlorobenzoic acid is precipitating gradually. After stirring the mixture for 12 hours the precipitate is filtered off by suction. The filtrate is washed with 200 ml of 2 n sodium hydroxide followed by 200 ml of water. After drying over sodium sulfate the methylene chloride is evaporated and the residue is distilled in vacuo. At 120.degree. C at 0.65 mm Hg there distills pure 8-aza-6,7,9-trimethyl-7,9-diethyl-1,4-dioxaspiro[4.5]decane-8-oxyl

### Example 4

octadecanoic acid 3,8,10-triethyl-7,8,10-trimethyl-1,5-dioxa-9-aza-spiro[5.5]undec-3-ylmethyl ester-9-oxyl

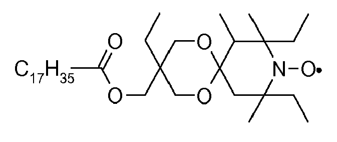

The title compound is prepared by oxidizing octadecanoic acid 3,8,10-triethyl-7,8,10-trimethyl-1,5-dioxa-9-aza-spiro[5.5]undec-3-yl-methyl ester (prepared in analogy to US 4,105,626, Example 4) as a red oil. MS (Cl): MH⁺=595 (C₃₆H₆₈NO₅ = 594.95).

c) compound of the formula IIb, prepared according to US6,479,608,

### Example 5

1-t-Butyl-3,3,5,5-tetraethyl-piperazin-2-on-4-oxyl 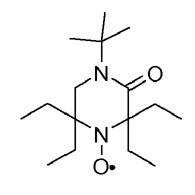 40 g (1 mol) of finely ground NaOH are added, with stirring, to a solution of 0.189 mol of 1,1-diethyl-2-t-butylaminoethylamin, (prepared in accordance with M. Senkus.: J.Am. Chem. Soc. 68, 10 (1946)) and 25 ml (0.3 mol) of chloroform in 250 ml of diethyl ketone at 10 °C. The reaction mixture is stirred for 16 hours at room temperature and is then filtered. The filtrate, concentrated by evaporation in a rotary evaporator, is chromatographed over silica gel with hexane/ethyl acetate (3:2). The pure fractions are concentrated by evaporation, to give 1-t-butyl-3,3,5,5-tetraethyl-piperazin-2-on (52%) as a yellow oil.

The compound is transformed into the title compound as red crystals, m.p. 34-37 °C. 45.3 g (0.2 Mol) of raw compound are dissolved in 450 ml of ethylacetate and 51.1 ml (0.3 Mol) of peracetic acid (39% in acetic acid) are added to the stirred solution under cooling within 20 minutes. The solution is stirred for another 2.5 hours, then diluted with 100 ml of hexane and washed with NaHCO₃ solution till neutral. The title compound is obtained after evaporation of hexane, chromatography of the residue on Silica gel with hexane-EtOAc (5:1) and crystallization from pentane.

### Example 6

1-t-octyl-3,3-diethyl-5,5-dimethyl-piperazin-2-on-4-oxyl

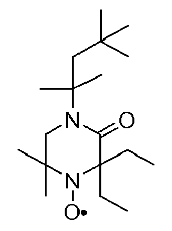

In analogy to Example 5 1,1-dimethyl-2-t-octylaminoethylamin, diethyl keton, chloroform and NaOH are reacted to give 1-t-octyl-3,3-diethyl-5,5-dimethyl-piperazin-2-on compound as a yellow oil.

0.4 g of sodium tungstate, 2 g of sodium carbonate and then, at 10 °C, 27.5 ml of hydrogen peroxide (35%, in water) are added to a solution of 0.064 mol of 1-t-octyl-3,3-diethyl-5,5-dimethyl-piperazin-2-on in 50 ml of methanol. The reaction mixture is stirred for 40 hours at room temperature and is then diluted with 100 ml of saturated NaCl solution and extracted with 5 x 50 ml of methyl-tert-butyl ether. The extracts are dried over MgSO₄, concentrated by evaporation and chromatographed over silica gel with hexane/ ethyl acetate (3:1). The pure fractions are concentrated by evaporation, giving the title compound as red crystals, m.p. 54-56 °C.

### Example 7:

tert-butyl-(1-dietylphosphono-2,2-dimethyl)-amine-N-oxyl 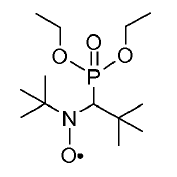 prepared as described in WO96/24620.

Preparation of the quinone methides according to EP744392 2,6-Di-tert-butyl-4-benzylidene-cyclohexa-2,5-dienone

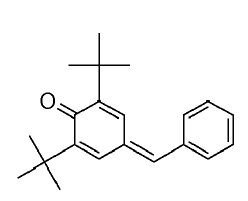

To a solution of 23.7 g (0.28 mol) of piperidine, 106.1 g (1.0 mol) of benzaldehyde and 206.3 g (1.0 mol) of 2,6-di-tert-butylphenol in 20 ml of toluene is added slowly 70 g (0.82 mol) of piperidine over a one-hour period at 135 DEG C-140 DEG C. The reaction mixture is then heated for another three hours with a continuous separation of water occurring. The resulting Mannich base prepared in situ is diluted with 200 ml of xylene and hydrogen chloride gas is bubbled into the reaction mixture at about 140 DEG C till a state of saturation is reached in about 45 minutes. The mixture is heated for another hour to ensure that the reaction is complete as seen by thin layer chromatography (tlc) and gas liquid chromatography (glc) tests. The piperidine hydrochloride formed is removed by filtration. The dark red filtrate obtained is washed thrice with 200 ml of water and finally stirred with 100 g of Kieselgur for 30 minutes. Removal of the Kieselgur by filtration and evaporation of the solvent afford 285.6 g of a dark red viscous oil which contains about 90% (glc) of the title compound. This product is purified further by distillation under vacuum (10 bar) giving 253.4 g (86.1% yield) of a fraction boiling between 160 DEG C-168 DEG C which is 96% pure in glc. This yellow viscous product slowly crystallizes on standing at room temperature.

(3,5-Di-tert-butyl-4-oxocyclohexa-2,5-dienylidene)acetonitrile

This compound can be made by the procedure of V. V. Ershov et al., Izv. Akad. Nauk. SSSR, Ser. Khim. (5), 928 (1966)

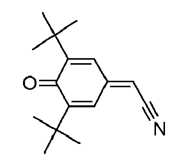

Methyl (3,5-Di-tert-butyl-4-oxocyclohexa-2,5-dienylidene)acetate

This compound can be made by the procedure of F. R. Hewgill et al., Aust. J. Chem. 30, 2565 (1977)

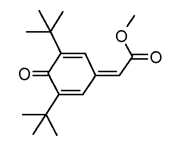

Two technical parameters of the new stabilizers were tested:
- 1.: Stabilization efficiency at 70 °C
a) in TMPTA (Trimethylolpropane triacrylate) which contains 5% photoinitiator IRGACURE 369 (2-benzyl-2-(dimethylamino)-1-[4-(4-morpholinyl)phenyl]-1-butanone)
b) in UV-curable offset ink, which contains Pigment Orange 34.
- 2.: Influence of the presence of the new In-can stabilizer on the curing efficiency of blue UV-curable offset ink.

### Experimental details

### Storage stability of TMPTA

5 g IRGACURE 369 were added to 95 g TMPTA (UCB) and stirred to give a clear, yellowish solution with an initiator concentration of 5 wt-%. 0.1 g stabilizer were added to the solution and stirred until the substance was dissolved completely. 2 ml of the solutions were filled into 2.5 ml-analytical vials and placed in a drying oven (2 samples per substance and concentration). The samples were stored at 70 °C and the polymerization (usually starting at the bottom, to the top) was checked visually (reported as days until the polymerization started).

### Storage stability of orange offset ink

0.2 g of a TMPTA solution containing 2.5 wt-% stabilizer were added to 5.0 g of a commercial orange offset ink (w/o previously added stabilizer) and were distributed homogeneously in a muller. 2.4 g of the ink were filled into a weighing container (glass, diameter 13 mm) and placed in a drying oven. The samples were stored at 70 °C and the polymerization of the ink (usually starting at the bottom, to the top) was checked with a spatula (reported as days until the polymerization started).

### Influence of the stabilizer on the curing efficiency of a blue offset ink

For the assessment of the influence on curing efficiency, a blue UV offset ink was selected as appropriate testing system.

Composition of the blue offset ink:

| **Weight (g)** | **Raw material** | **Remark** |
|---|---|---|
| 18.3 | Ebecryl 1608 (UCB) | Diluted epoxyacrylate in GPTA |
| 18.3 | Ebecryl 657 (UCB) | Polyester tetraacrylate |
| 20.0 | Ebecryl 220 (UCB) | Aromatic urethane hexaacrylate |
| 20.9 | Ebecryl 150 (UCB) | Diluting epoxyacrylate |
| 22.5 | Irgalite Blue GLO (Ciba) | Copper phthalocyanine pigment (β-form) |
| 6.0 | Irgacure 1300 (Ciba) | Fotoinitiator (Irgacure 369 + Irgacure 651 benzildimethyl-ketal) |
| 106.0 | Total formulation | |

0.2 g of a TMPTA solution containing 2.5 wt-% stabilizer were added to 5.0 g of the blue offset ink and were distributed homogeneously in a muller. The inks were printed with a Prüfbau multipurpose printability tester on white Lumiart paper (1.5 g/m²) and were exposed to the radiation of one medium-pressure mercury lamp, at 150 W/cm in an UV curing unit from IST-Metz. The through cure (line speed in m/min) and the surface cure (y/n) of the ink were assessed after the exposure.

### Results

| Stabilizer | Concentration [wt-%] | Start of TMPTA polymerization at 70 °C [days] | Start of polymerization of orange offset ink at 70 °C [days] | Line speed for curing of blue offset ink [m/min] |
|---|---|---|---|---|
| References | | | | |
| Blank | - | 1-2 | 3 | 130 |
| Florstab UV-1¹ | 1.0² | 13 | >24 | 120 |
| Irgastab UV10³ | 0.1 | 18 | 3 | 90 |
| Quinone methides | | | | |
| 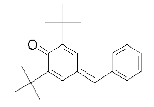 | 0.1 | 4 | >24 | 120 |
| 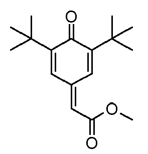 | 0.1 | 15 | >24 | 110 |
| 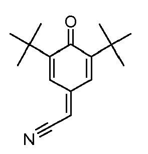 | 0.1 | 13 | >24 | - |

| | | | | |
|---|---|---|---|---|
| 1) Kromachem. 2) Commonly used concentration of Florstab UV1 in UV inks. 3) Irgastab UV 10 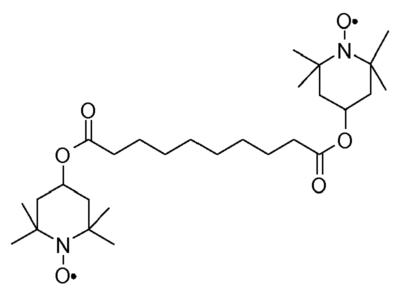 Ciba Specialty Chemicals. | | | | |

### Storage stability using a mixture of a highly sterically hindered nitroxyl radical and a quinine methide.

Mixture used: 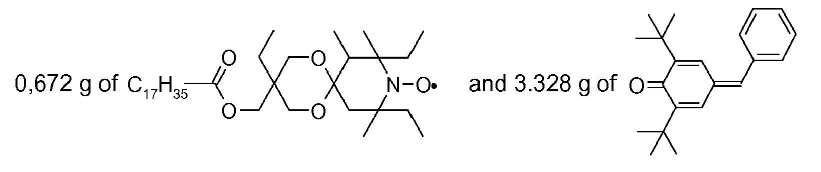 in 16g OTA 480 UCB. This corresponds to a 20% solution of stabilizer.

### Formulation 1: TMPTA (Trimethylolpropane triacrylate monomer UCB) which contains 5% photoinitiator IRGACURE 369 (2-benzyl-2-(dimethylamino)-1-[4-(4-morpholinyl)phenyl]-1-butanone)

0.05g or 0.1g of the stabilizer mixture in OTA 480 (as a 20% solution) were added to 10g of the Formulation 1 and stirred until the substance was dissolved completely. 2 ml of the solutions were filled into 2.5 ml-analytical vials and placed in a drying oven (2 samples per substance and concentration). The samples were stored at 70 °C and the polymerization (usually starting at the bottom, to the top) was checked visually (reported as days until the polymerization started).

There was no gelation after 15 days. Without stabilization polymerization starts after two days.

**Formulation 2:** Orange ink from SICPA Security Inks which contains 5% photoinitiator IRGACURE 369.

0.025g or 0.5g of the stabilizer mixture in OTA 480 (as a 20% solution) were added to 10g of the Formulation 2 and mixed using a pigment mill. 2,4 g samples were stored at 70 °C and the polymerization (usually starting at the bottom, to the top) was checked visually (reported as days until the polymerization started).

There was no gelation after 15 days. Without stabilization polymerization starts after two days.

## Claims

1. The use of quinone methides of the formula III as in-can stabilizer for UV-curable resins 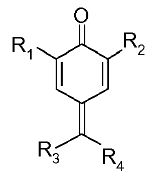 wherein
R₁ and R₂ independently of each other are C₁-C₁₈alkyl, C₅-C₁₂cycloalkyl, C₇-C₁₅phenylalkyl, optionally substituted C₆-C₁₀ aryl;
R₃ and R₄ independently of each other are H, optionally substituted C₆-C₁₀-aryl, 2-,3-,4-pyridyl, 2-,3-furyl or thienyl COOH, COOR₁₀, CONH₂, CONHR₁₀, CONR₁₀R₁₁, -CN, -COR₁₀,-OCOR₁₀, -OPO(OR₁₀)₂, wherein R₁₀ is C₁-C₈alkyl or phenyl.

2. The use of quinone methides according to claim 1 as in-can stabilizer for UV curable pigmented or unpigmented urethane resins, acrylic resins, polyester resins, and epoxy resins.

3. The use of quinone methides according to claim 1 as in-can stabilizer for overprint varnishes and inks.

4. The use of a blend of
1-99mol% of a stable highly sterically hindered nitroxyl radicals of the formulae I or II 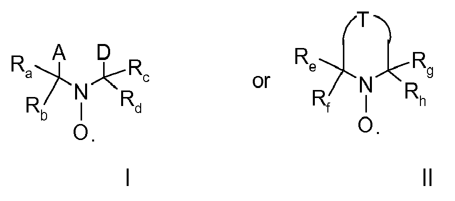 wherein
Rₐ, R_{b} R_{c}, R_{d} are independently of each other optionally substituted C₁-C₁₈alkyl or benzyl, optionally substituted C₅-C₁₂cycloalkyl or C₆-C₁₀-aryl; or Rₐ, R_{b} R_{c}, R_{d} together with the carbon atom form a C₅-C₁₂cycloalkyl ring,
A and D are groups required to complete the open chain nitroxyl radical;
Rₑ, R_{f}, Rg, Rₕ are independently of each other optionally substituted C₁-C₁₈alkyl or benzyl, optionally substituted C₅-C₁₂cycloalkyl or C₆-C₁₀-aryl; or Rₑ, R_{f}, Rg, Rₕ together with the carbon atom form a C₅-C₁₂cycloalkyl ring, **with the proviso** that at least one group is different from methyl;
T is a group to complete a ring nitroxyl radical, and of
99 to 1mol% of a quinone methide of the formula III according to claim 1 as in-can stabilizer for UV-curable resins.

5. A Method for increasing the storage stability of a radiation curable coating composition or ink composition by adding to the coating- or the ink composition, optionally comprising a photoinitiator, an amount of from 0.0001 to 10% by weight, based on the total amount of coating composition or ink composition of an in-can stabilizer as defined in claim 1, or an in-can stabilizer blend as defined in claim 4.
